# EUROPEAN PATENT APPLICATION

(11) **EP 1 548 051 A1**
(43) Date of publication of application: **29.06.2005**
(21) Application number: 03104391.2
(22) Date of filing: 26.11.2003
(51) Int. Cl.: C08J 9/14, C08J 9/00

(54) **Replacement of hydrochlorofluorocarbons for polymer foam manufacture**

(71) Applicant: SOLVAY (Société Anonyme), 1050 Bruxelles (BE)
(72) Inventor: Zipfel, Lothar, 30880, Laatzen (DE); Dournel, Pierre, 1040, Bruxelles (BE)
(74) Representative: Jacques, Philippe

(57) **Abstract**

Use for foam manufacture in a foam manufacturing equipment designed for use with hydrochlorofluorocarbons of a composition comprising at least one hydrofluorocarbon blowing agent and a non-halogenated polar organic compound having an atmospheric boiling point of from 30°C to 150°C.

## Description

The present invention relates to the replacement of hydrochlorofluorocarbons in a process for the manufacture of polymer-based foams.

In a process for manufacturing polymer-based foams, the choice of blowing agent is a problem of great technical interest since the physical properties of the foam or, when the foam is used, of the manufactured article, especially its compressibility, its dimensional stability, its hygroscopicity, its thermal conductivity, its density, its cellular structure and its surface properties, depend critically on the nature of the blowing agent. In addition, the blowing agent must be compatible with the polymer under the operating conditions. For example, it is desirable for the blowing agent to be soluble, when appropriate, in the polymer melt.

Hydrochlorofluorocarbons, such as for example mixtures of HCFC-22 (chlorodifluoromethane) with HCFC 142b (1-chloro-1,1-difluoroethane), have also been used as blowing agent. These compounds have to be progressively replaced because they are questioned in the context of the degradation of the stratospheric ozone layer.

The Applicant has already proposed in WO-A-01/19905 certain hydrofluorocarbon-based blowing agent compositions in this context.

It has been proposed to use carbon dioxide as single blowing agent. However, the foams produced in this way have a poor thermal insulation capacity, associated with a rapid increase in thermal conductivity over time. What is more, this compound causes problems during processing, due to its high gas pressure thereby requiring to replace equipments which were designed for use with hydrochlorofluorocarbons by high-pressure equipments, requiring high-performance-cooling more powerful engines, notably to drive screws and different design of extrusion dies.

In addition to above-mentioned requirements, it was now also desirable to be able to use foam manufacturing equipment designed for use with hydrochlorofluorocarbons with chlorine-free blowing agents. In particular, it was desirable to be able to continue use of existing foaming equipment with chlorine-free blowing agents. It has now been found that such a goal can be reached by using certain compounds in the foam manufacturing process.

The invention concerns consequently the use for foam manufacture in a foam manufacturing equipment designed for use with hydrochlorofluorocarbons of a composition comprising at least one hydrofluorocarbon blowing agent and a non-halogenated polar organic compound having an atmospheric boiling point of from 30°C to 150°C.

Surprisingly, the use according to the invention makes possible to keep at the same level the production rate of foam product when switching from industrial production with HCFC-blowing agent to the use according to the invention. The ratio of production rate according to the use according to the invention to the production rate with HCFC-blowing agent is generally at most 110%, often at most 100%. This ratio is generally at least 85%, often this rate is greater than or equal to 90%. Preferably, this rate is greater than or equal to 95%.

Typically, in the use according to the invention, a stable continuous production of 100 to 1200 kg/h of foam product can be achieved. Preferably the production rate is greater than or equal to about 250 kg/h. More preferably, it is greater than or equal to about 500 kg/h. A production rate greater than or equal to about 1000 kg/h can be suitably achieved.

In the use according to the invention, the non-halogenated polar organic compound has preferably an atmospheric boiling point of from 50°C to 100°C.

The non-halogenated polar organic compound is preferably an oxygenated compound. More preferably, it is selected from ethers, ketones and, in particular, alcohols. Ethanol is most particularly preferred.

In the use according to the invention, the hydrofluorocarbon blowing agent comprises preferably 1,1-difluoroethane (HFC-152a). Use of this compound as hydrofluorocarbon blowing agent allows to achieve particularly good production rates. Often, the hydrofluorocarbon comprises, optionally in addition to HFC-152a, 1,1,1,2-tetrafluoroethane.

In this case, the weight ratio of 1,1-difluoroethane to 1,1,1,2-tetrafluoroethane is generally greater than 10:90. Often the ratio is at least 20:90. Preferably, the ratio is equal to or greater than 30:70. IfHFC-134a is present, the weight ratio of 1,1-difluoroethane to 1,1,1,2-tetrafluoroethane is generally at most 90:10. More often, the ratio is at most 70:30. A ratio of at most 50:50 is preferred.

In the use according to the invention, the content of non-halogenated polar organic compound having an atmospheric boiling point of from 30°C to 150°C in the composition comprising the hydrofluorocarbon blowing agent and the non-halogenated polar organic compound is generally at least 7% by weight and preferably more than 10% by weight. This content is generally at most 18% by weight and preferably at most 15 % by weight. A content of from 10.5% by weight to 13% by weight is more particularly preferred. If appropriate, the aforementioned contents apply particularly when the hydrofluorocarbon blowing agent comprises HFC-152a and HFC-134a, preferably in the weight ratio mentioned above.

In the use according to the invention, carbon dioxide, in particular in liquid form can also be added as supplemental foaming agent. In this case, the content of carbon dioxide is generally at most 40% by weight relative to the total amount of hydrofluorocarbon blowing agent, non-halogenated polar organic compound and carbon dioxide. This content is preferably from 2 % to 20% more preferably 3 to 10 % by weight.

In a particular embodiment, the hydrofluorocarbon blowing agent can optionally also comprise other hydrofluoroalkanes such as for example 1,1,1,2,3,3,3-heptafluoropropane, 1,1,1,3,3-pentafluoropropane and/or 1,1,1,3,3-pentafluorobutane.

It has been found that addition notably of 1,1,1,3,3-pentafluoropropane and/or 1,1,1,3,3-pentafluorobutane improves the stability of the foam manufacture, that means that foaming of notably thermoplastic polymers such as polystyrene can be carried out continuously with low variations of the foam quality. The addition notably of 1,1,1,3,3-pentafluoropropane and/or 1,1,1,3,3-pentafluorobutane improves in particular the surface properties notably of the aforementioned foams, e.g. avoiding shark-skin phenomena on extruded polystyrene.

This use of 1,1,1,3,3-pentafluoropropane and/or 1,1,1,3,3-pentafluorobutane is not limited to use with the specific compositions of hydrofluorocarbon blowing agent and non-halogenated polar organic compound. Good results can also be obtained with other non-chlorinated compounds such as blowing agents and low boiling point additives such as non-halogenated polar organic compound as described above, suitable for foaming notably of extruded polystyrene.

The content of 1,1,1,3,3-pentafluoropropane and/or 1,1,1,3,3-pentafluorobutane relative to the sum of weight of 1,1,1,3,3-pentafluoropropane and/or 1,1,1,3,3-pentafluorobutane and non-chlorinated compounds is generally from 1 to 30% by weight, preferably from 10 to 25% by weight and more preferably from 15 to 20% by weight.

In the use according to the invention, the total quantity of hydrofluorocarbon blowing agent, non-halogenated polar organic compound and optional carbon dioxide introduced into the foaming equipment is generally from 1 to 10% by weight relative to total amount of material introduced into the foaming equipment, preferably from 4 to 9% by weight.

In the use according to the invention, the foam manufacturing equipment is preferably designed for use with a mixture of chlorodifluoromethane (HCFC-22) and 1,1-difluoro-1-chloroethane (HCFC-142b), preferably in a weight ratio HCFC-22/HCFC-142b of about 40:60. More particularly, the foam manufacturing equipment is an extruder, in particular for manufacture of extruded polystyrene foam (XPS), which has preferably been used with a mixture of chlorodifluoromethane (HCFC-22) and 1,1-difluoro-1-chloroethane as described above. The maximum operating pressure of such foam manufacturing equipment is generally less than 300 bars, often less than 250 bars and sometimes less than 220 bars.

In the use according to the invention, the composition of hydrofluorocarbon blowing agent and non-halogenated polar organic compound can be supplied to the foam manufacturing equipment as a mixture of its components. The at least one hydrofluorocarbon and the non-halogenated polar organic compound of the composition can also be supplied separately to the foam manufacturing equipment. Supply is generally carried out by injection.

The invention concerns also a process for manufacturing a polymer foam comprising the use according to the invention.

The invention concerns also a composition comprising at least one hydrofluorocarbon blowing agent and a non-halogenated polar organic compound having an atmospheric boiling point of from 30°C to 150°C wherein the content of the non-halogenated polar organic compound in the composition is from more than 10 to 15 % by weight, more particularly from 10.5% by weight to 13% by weight, as described hereinbefore.

The examples below are intended to illustrate the invention without, however, limiting it.

### Example 1

A stable continuous production of XPS foam panels was carried out at 210 kg/h with a twin- screw extruder equipped with ordinary cooling equipment working with an HCFC-22/HCFC-142b blowing agent having a 22/142b weight ratio of 40/60. During the production, the blowing agent was switched progressively to HFC-152a and ethanol has been used additionally. A stable production has been met at a flow rate of 18 kg/h HFC-152a and 1.4 kg/h ethanol. The density of the foam was 35.5kg/m³, and the panel thickness 55mm.

### Example 2

The example was carried out starting as in example 1, but a mixture of HFC-134a and HFC-152a in a weight ratio of 30/70 was used as hydrofluorocarbon blowing agent instead of HFC-152a. A stable production has been met at a flow rate of 21 kg/h 134a/152a 30/70 blend and 2,5 kg/h Ethanol.

### Example 3

The example was carried out starting as in example 1, but a mixture of HFC-134a and HFC-152a in a weight ratio of 50/50 was used as hydrofluorocarbon blowing agent instead of HFC-152a. A stable production has been met at a flow rate of 22 kg/h 134a/152a 50/50 blend and 3 kg/h Ethanol.

## Claims

1. Use for foam manufacture in a foam manufacturing equipment designed for use with a blowing agent containing at least one hydrochlorofluorocarbon of a composition comprising at least one hydrofluorocarbon blowing agent and a non-halogenated polar organic compound having an atmospheric boiling point of from 30°C to 150°C.

2. Use according to claim 1, wherein the non-halogenated polar organic compound is an oxygenated compound.

3. Use according to claim 2, wherein the non-halogenated polar organic compound is ethanol.

4. Use according to anyone of claims 1 to 3, wherein the hydrofluorocarbon comprises 1,1-difluoroethane (HFC-152a).

5. Use according to claim 4, wherein the hydrofluorocarbon comprises further 1,1,1,2-tetrafluoroethane.

6. Use according to anyone of claims 1 to 5, wherein the content of non-halogenated polar organic compound having an atmospheric boiling point of from 30°C to 150°C in the composition comprising the hydrofluorocarbon blowing agent and the non-halogenated polar organic compound is from 7 to 18% by weight.

7. Use according to claim 6, wherein the content of non-halogenated polar organic compound is from more than 10 to 15% by weight.

8. Use according to anyone of claims 1 to 7, wherein the foam manufacturing equipment is designed for use with a mixture of chlorodifluoromethane (HCFC-22) and 1,1-Difluoro-1-chloroethane (HCFC-142b), preferably in a weight ratio HCFC-22/HCFC-142b of 40:60.

9. Use according to anyone of claims 1 to 8, wherein the foam manufacturing equipment is an extruder for manufacture of extruded polystyrene foam.

10. Use according to anyone of claims 1 to 9, wherein the composition is supplied to the foam manufacturing equipment as a mixture of its components.

11. Use according to anyone of claims 1 to 9, wherein the at least one hydrofluorocarbon and the non-halogenated polar organic compound of the composition are supplied separately to the foam manufacturing equipment.

12. Use according to anyone of claims 1 to 11, wherein the production rate of foam product is 85 to 110% relative to the production rate of the foam manufacturing equipment when operated with HCFC-blowing agent.

13. Process for the manufacture of a polymer foam, comprising the use according to anyone of claims 1 to 12.

14. Composition comprising at least one hydrofluorocarbon blowing agent and a non-halogenated polar organic compound having an atmospheric boiling point of from 30°C to 150°C wherein the content of the non-halogenated polar organic compound in the composition is from more than 10 to 15 % by weight.

15. Use of 1,1,1,3,3-pentafluoropropane and/or 1,1,1,3,3-pentafluorobutane for improving the stability of a thermoplastic foam manufacturing process.
